# EUROPEAN PATENT APPLICATION

(11) **EP 4 579 596 A1**
(43) Date of publication of application: **02.07.2025**
(21) Application number: 23856515.4
(22) Date of filing: 16.08.2023
(51) Int. Cl.: G06T 7/33

(54) **MULTIMEDIA PROCESSING METHOD AND APPARATUS, AND DEVICE AND MEDIUM**

(30) Priority: 23.08.2022 CN 202211012666
(71) Applicant: Beijing Zitiao Network Technology Co., Ltd., Beijing 100190 (CN)
(72) Inventor: XU, Nan, Beijing 100028 (CN); ZHU, Yixuan, Beijing 100028 (CN)
(74) Representative: Dentons UK and Middle East LLP
(86) International application number: PCT/CN2023/113268
(87) International publication number: WO 2024/041425

(57) **Abstract**

The embodiments of the present disclosure relate to a multimedia processing method and apparatus, and a device and a medium. The method comprises : in response to receiving a template selection instruction of a user, acquiring a target template corresponding to the template selection instruction, wherein the target template includes a plurality of image sub-templates; receiving at least one original image, which is uploaded by the user for the target template; determining original images corresponding to the image sub-templates, and obtaining a plurality of target images on the basis of the image sub-templates and the original images corresponding to the image sub-templates; and when the plurality of target images are previewed, displaying, in an image preview interface, a preview effect of the plurality of target images corresponding to the target template, wherein the image preview interface comprises an image editing control, which is used for adjusting the plurality of target images. The embodiments of the present disclosure can effectively shorten the time taken for multi-image editing, and improve the efficiency of multi-image editing.

## Description

This application claims the priority of Chinese Patent Application No. 202211012666.X filed on August 23, 2022, the disclosure of which is hereby incorporated in its entirety as a part of this application.

### TECHNICAL FIELD

Embodiments of the present disclosure relate to a multimedia processing method and apparatus, a device and a medium.

### BACKGROUND

Multimedia is widely used in daily life and work now. Taking multimedia being images as an example, an increasing number of users opt to use image editing software after capturing photos to enhance their images (image editing). They can incorporate filters, text, stickers, and effects, as well as perform tasks like image stitching and resizing, resulting in images that achieve the desired visual effect.

Image editing software often provides users with image editing templates, allowing for quick editing of individual images. However, the inventor has found that if users wish to edit multiple images, they need to individually search for the required image editing templates for each image to be edited, and then perform operations such as image export, template adjustment, and image export separately. This process is time-consuming and inefficient.

### SUMMARY

To solve the above technical problems or at least partially solve the above technical problems, the present disclosure provides a multimedia processing method and apparatus, a device and a medium.

Embodiments of the present disclosure provide a multimedia processing method. The multimedia processing method includes: in response to receiving a template selection instruction from a user, acquiring a target template corresponding to the template selection instruction, wherein the target template includes a plurality of image sub-templates; receiving at least one original image uploaded by the user for the target template; determining original images corresponding to image sub-templates, and obtaining a plurality of target images based on the image sub-templates and the original images corresponding to the image sub-templates; and displaying preview effects of the plurality of target images corresponding to the target template on an image preview interface while previewing the plurality of target images, wherein the image preview interface includes image editing controls for adjusting the plurality of target images.

Optionally, the step of determining original images corresponding to image sub-templates includes: according to an arrangement order of the image sub-templates in the target template and a number of images that each image sub-template being able to edit, assigning the original images to the image sub-templates in a preset order; and determining the original images corresponding to the image sub-templates based on an assignment result.

Optionally, the step of determining the original images corresponding to the image sub-templates based on an assignment result includes: for an image sub-template with an assigned number of original images equal to the number of images it is able to edit, taking the assigned original images as the original images corresponding to the image sub-template; for an image sub-template with an assigned number of original images less than the number of images it is able to edit, acquiring supplementary images of the image sub-template, and taking the assigned original images and the supplementary images as the original images corresponding to the image sub-template, wherein the supplementary images are obtained by copying one or more of the original images in a predefined manner; and for an image sub-template that does not have any assigned original image, determining that the image sub-template does not have a corresponding original image, and discarding the image sub-template.

Optionally, the step of determining original images corresponding to image sub-templates includes: acquiring template information of the image sub-templates and image information of the original images; and determining the original images corresponding to each image sub-template according to the template information and the image information, wherein the original images corresponding to different image sub-templates are the same or different.

Optionally, the template information of the image sub-templates includes material information of each image sub-template, a number of images that each image sub-template is able to edit, and a total number of the image sub-templates, and the image information of the original images includes content information of the original images and a total number of the original images.

Optionally, the step of displaying preview effects of the plurality of target images corresponding to the target template on an image preview interface includes: displaying the plurality of target images on the image preview interface based on an arrangement order of the plurality of image sub-templates in the target template.

Optionally, the step of displaying the plurality of target images on the image preview interface includes: displaying each target image of the plurality of target images as a main view image on the image preview interface in turn; and displaying thumbnail images of the plurality of target images on the image preview interface, wherein a size of the thumbnail images is smaller than that of the main view image, and the order in which the target images are displayed as the main view image and the arrangement order of the thumbnail images of the target images are both consistent with the arrangement order of the corresponding image sub-templates in the target template.

Optionally, the image editing controls include an image content editing control, and the method further includes: in response to the image content editing control being triggered, switching from the image preview interface to an image editing interface, and displaying an image to be edited among the plurality of target images on the image editing interface, wherein the image editing interface includes a plurality of child controls for editing content of the image to be edited; and in response to a target child control among the plurality of child controls being triggered, editing the image to be edited based on a trigger operation on the target child control.

Optionally, the image editing interface further includes a thumbnail image display control, and wherein the method further includes: in response to the thumbnail image display control being in a first state, displaying the thumbnail images of the plurality of target images on the image editing interface; and in response to the thumbnail image display control being in a second state, hiding the thumbnail images of the plurality of target images on the image editing interface.

Optionally, the step of displaying the thumbnail images of the plurality of target images on the image editing interface includes: determining arrangement and display positions of the thumbnail images of the plurality of target images on the image editing interface according to a content editing operation of the user on the image to be edited; and based on the arrangement and display positions, displaying the thumbnail images of the plurality of target images on the image editing interface.

Optionally, the image editing controls include an order adjustment control and/or an image deletion control, and the method further includes: in response to the order adjustment control being triggered, adjusting a display order of the plurality of target images based on a trigger operation on the order adjustment control; and in response to the image deletion control being triggered, deleting a target image corresponding to a trigger operation on the image deletion control.

Optionally, the plurality of target images have corresponding multimedia associated resources, and the multimedia associated resources are multimedia resources that are simultaneously played during the carousel presentation of the plurality of target images.

Embodiments of the present disclosure further provides a multimedia processing apparatus. The multimedia processing apparatus includes: a target template acquisition module, configured to in response to receiving a template selection instruction from a user, acquire a target template corresponding to the template selection instruction, wherein the target template includes a plurality of image sub-templates; an original image receiving module, configured to receive at least one original image uploaded by the user for the target template; a target image acquisition module, configured to determine original images corresponding to image sub-templates, and obtain a plurality of target images based on the image sub-templates and the original images corresponding to the image sub-templates; and a target image preview module, configured to display preview effects of the plurality of target images corresponding to the target template on an image preview interface while previewing the plurality of target images, wherein the image preview interface includes image editing controls for adjusting the plurality of target images.

Embodiments of the present disclosure further provides an electronic device. The electronic device includes a processor; and a memory for storing executable instructions, wherein the processor is configured to read the executable instructions from the memory and execute the executable instructions to implement any of the image processing method described above.

Embodiments of the present disclosure further provides a computer-readable storage medium on which a computer program is stored, wherein the computer program is used to implement any of the image processing method described above.

It should be understood that the content described in this section is not intended to identify key or important features of the embodiments disclosed herein, nor is it intended to limit the scope of the disclosure. The other features disclosed herein will be easily understood through the following specification.

### BRIEF DESCRIPTION OF DRAWINGS

The accompanying drawings, which are incorporated in and constitute a part of the present disclosure, illustrate embodiments consistent with the present disclosure and together with the specification, serve to explain the principles of the present disclosure.

In order to explain the technical scheme in the embodiments of the present disclosure more clearly, the drawings needed in the embodiments will be briefly introduced below. Obviously, for those of ordinary skill in the art, other drawings can be obtained according to the provided drawings without paying creative labor.
Fig. 1 is a flowchart of a multimedia processing method according to an embodiment of the present disclosure;
Fig. 2 is a schematic diagram of an interface according to an embodiment of the present disclosure;
Fig. 3 is a schematic diagram of an interface according to an embodiment of the present disclosure;
Fig. 4 is a schematic diagram of an interface according to an embodiment of the present disclosure;
Fig. 5 is a schematic diagram of an interface according to an embodiment of the present disclosure;
Fig. 6 is a schematic diagram of an interface according to an embodiment of the present disclosure;
Fig. 7 is a schematic diagram of a multimedia processing apparatus according to an embodiment of the present disclosure; and
Fig. 8 is a schematic diagram of an electronic device according to an embodiment of the present disclosure.

### DETAILED DESCRIPTION

In order to have a clearer understanding of the above objectives, features, and advantages of the present disclosure, further description of the disclosed solution will be provided below. It should be noted that, without conflict, the embodiments disclosed herein and the features in the embodiments can be combined with each other.

The following description elaborates on many specific details to facilitate a full understanding of the present disclosure, but the present disclosure may also be implemented in other ways different from those described herein; Obviously, the embodiments described herein are only a part of the disclosed embodiments, not all of the embodiments.

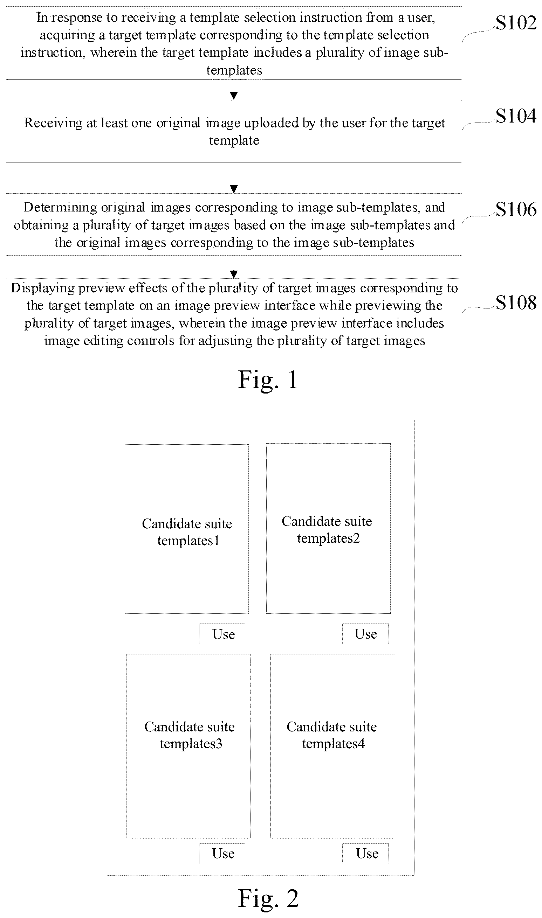

Embodiments of the present disclosure involve: in response to receiving a template selection instruction from a user, acquiring a target template (including a plurality of image sub-templates) corresponding to the template selection instruction; receiving at least one original image uploaded by the user for the target template; determining original images corresponding to the image sub-templates, and obtaining a plurality of target images based on the image sub-templates and the original images corresponding to the image sub-templates; and displaying preview effects of the plurality of target images corresponding to the target template on an image preview interface while previewing the plurality of target images, the image preview interface including image editing controls for adjusting the plurality of target images. In this way, the plurality of target images can be obtained directly by means of the target template including the plurality of image sub-templates and the original images uploaded by the user, and the user may also adjust the target images by using the image editing controls in the image preview process, which is convenient and fast, effectively shortening the time required for editing multiple images and enhancing editing efficiency. Fig. 1 is a flowchart of a multimedia processing method according to an embodiment of the present disclosure. The method may be executed by a multimedia processing apparatus, and the apparatus may be implemented by software and/or hardware, and is generally integrated in an electronic device. In practice, the image processing method may be applied to clients, small programs or web pages with image editing function, which is not limited here. As shown in Fig. 1, the method mainly includes the following steps S102-S108.

In S102, in response to receiving a template selection instruction from a user, acquiring a target template corresponding to the template selection instruction, wherein the target template includes a plurality of image sub-templates.

It should be noted that although image templates are also provided in the related art, they are typically standalone image templates that can only generate one single edited image. However, the target template provided by the embodiments of the present disclosure includes a plurality of image sub-templates, allowing for the simultaneous generation of multiple edited images. Each image sub-template (also called image editing sub-template) may be used to edit at least one image. For example, the image sub-template carries editing record information, which may indicate how to edit images, for example, how to synthesize a specified material with the image, and/or how to stitch multiple images together, so as to obtain an edited image. Materials used in the image sub-templates for editing images, such as text, stickers, filters and effects, are not limited here.

In practice, one or more suite templates may be displayed in a template display interface, each suite template includes a plurality of image sub-templates, and users may select the suite template they need from the template display interface. After receiving the template selection instruction from the user, a template selected by the user may be used as the target template.

In some implementation examples, the similarity between different image sub-templates in the target template is greater than a preset similarity threshold. Here, the similarity is determined based on one or more of the materials, editing methods and template themes adopted by different image sub-templates. That is, the material, editing method and template theme adopted by the image sub-templates are all factors that influence the assessment of similarity between different image sub-templates. In response to multiple influencing factors, the similarity assessment results for each influencing factor may be weighted to obtain an overall similarity assessment result. It can be understood that different image sub-templates belonging to the same template typically share certain similar characteristics, such as using the same text content or filters. For another example, the editing methods of different sub-templates may be similar, for example, placing stickers in the upper right corner of the image or having similar layouts across different layers. For another example, the template themes of different sub-templates may be the same, for example, different sub-templates are all themed as "celebrating festivals" or different sub-templates are all themed as "nostalgic memories".

There are similarities between different image sub-templates in the target template, allowing the overall effect of the plurality of images edited from the target template to have a sense of unity, thus presenting a systematic style to the user. In the embodiment of the present disclosure, it is taken into full account that when users wish to obtain multiple edited images at once, they typically want these images to share certain commonalities, such as consistent themes and a similar feel. Therefore, by providing users with a template that integrates sub-templates with certain similarities, it can significantly save users' time in searching for similar templates, enabling them to conveniently and efficiently perform batch editing of images and obtain multiple edited images with shared characteristics.

In S104, receiving at least one original image uploaded by the user for the target template.

The number of the original images is not limited by the embodiment of the present disclosure, which may be one or more. In some implementation examples, the user may pre-upload all the original images that need to be edited for the target template. For example, the target template may suggest that the user upload N original images to facilitate bulk uploading at the initial stage. Alternatively, the target template may impose no limits on the number of images, allowing users to upload original images according to their needs. Later, the target template will adapt based on the number of sub-templates it contains, the number of images each sub-template can support, and the number of original images. In other implementation examples, the user may also upload corresponding original images for each image sub-template in the target template, such as uploading relevant original images based on sample images of each sub-template. No limitations are imposed here.

In S106, determining original images corresponding to the image sub-templates, and obtaining a plurality of target images based on the image sub-templates and the original images corresponding to the image sub-templates.

It can be understood that there are multiple image sub-templates, and the number of the original images uploaded by the user is one or more. Therefore, in the embodiment of the present disclosure, after receiving the original images from the user, the original images corresponding to the image sub-templates will be determined. For example, corresponding original images may be assigned to each image sub-template. The image sub-templates assigned with original images may edit their respective original images, while those image sub-templates not assigned with original images (such as in cases where the number of original images is limited) may be discarded or previously assigned original images may be reused for them. The above is an exemplary explanation and is not intended to impose restrictions. For each image sub-template assigned with an original image, the corresponding original image may be edited using the image sub-template to produce the target image corresponding to the image sub-template.

In practice, the original images corresponding to different image sub-templates may be the same or different. For example, in response to the user uploading only one original image for the target template, all the image sub-templates will edit the same original image. Alternatively, in response to the user pre-uploading multiple original images at once, but the number of the original images being less than the number of the image sub-templates, a preset strategy may be used to determine which original image corresponds to each image sub-template, allowing for the possibility that different image sub-templates may correspond to the same or different original images. Additionally, in response to the user uploading corresponding original images for each image sub-template, each sub-template only needs to edit its respective original image. In practice, one image sub-template may correspond to one or more original images, and one original image may correspond to one or more image sub-templates. The above is an exemplary explanation and should not be considered a limitation.

In S108, displaying preview effects of the plurality of target images corresponding to the target template on an image preview interface while previewing the plurality of target images, wherein the image preview interface includes image editing controls for adjusting the plurality of target images.

In practice, in response to specified preview trigger conditions being met, the plurality of target images may be previewed. The preview trigger conditions may be that a preview command from the user is received, meaning that the plurality of target images will only be previewed upon receiving the preview command. The preview trigger conditions may also be that it is detected that the image sub-template has completed editing the original image, which means that the preview will automatically occur once the target image is obtained. The image preview interface may display the preview effects of the plurality of target images for users to view directly. Meanwhile, the image editing controls in the image preview interface allow users to adjust the target images according to their needs. It should be noted that the image editing controls may include controls for editing the content of the target images, controls for adjusting the sequence of multiple target images, and controls for deleting the target images, among others. Additionally, the image editing controls may be either displayed on the interface or hidden from view. The embodiment of the present disclosure does not impose restrictions on the functions, display forms, or number of the image editing controls.

In this way, the plurality of target images can be obtained directly by means of the target template including the plurality of image sub-templates and the original images uploaded by the user, and the user may also adjust the target images by using the image editing control in the image preview process, which is convenient and fast, thus, the time required for editing multiple images can be effectively shortened and editing efficiency can be enhanced.

In practice, effect images corresponding to at least one candidate suite templates may be displayed on the template display page. The effect image is the result of editing a sample image using the candidate suite template, allowing users to clearly understand the editing effects of the candidate suite templates. The effect image of the candidate suite template includes effect images corresponding to each image sub-template. The user may then select a target template from the at least one candidate suite template based on the effect images corresponding to the candidate suite templates. In response to detecting that a user triggers a specific candidate suite template, such as triggering a use button corresponding to a specific candidate suite template, it is considered that a template selection command from the user has been received. For example, please refer to a schematic diagram of an interface shown in Fig. 2, which specifically illustrates the template display interface. To facilitate understanding, Fig. 2 also depicts four candidate suite templates. It should be noted that the template display interface actually shows the effect images of each candidate suite template. Each candidate suite template corresponds to a use button, and in response to a user triggering this button, it is interpreted as receiving a template selection command from the user. A suite template chosen by the user from the candidate suite templates on the template display page (i.e., the suite template corresponding to the triggered use button) is the target template.

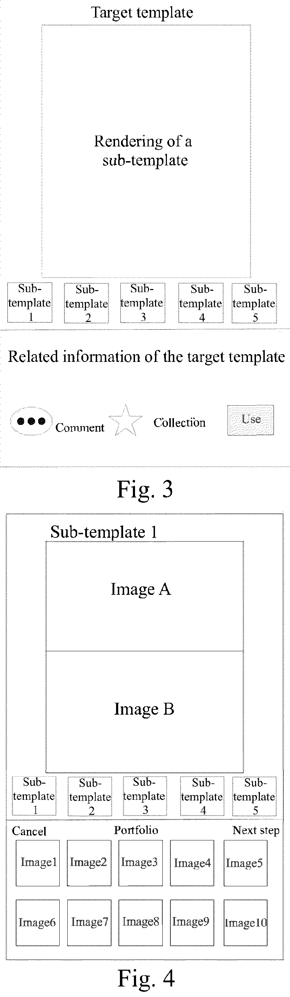

Further, the embodiment of the present disclosure may also provide a template preview interface for the user. For example, after the user selects the target template in the template display interface, the template preview interface may be displayed, as shown in Fig. 3, and the target template may be further displayed in the template preview interface. For example, effect images of each sub-template in the target template may be displayed in the template preview interface. In some specific implementations, the effect images of each image sub-template in the target template are displayed in a carousel form in the template preview interface, while thumbnail images of all the sub-templates may also be displayed in designated locations. Furthermore, along with displaying the effect images, music that matches the target template may be played in the template preview interface. In addition, the template preview interface may also display relevant information of the target template, such as template creator information and template style theme, which is not limited here. Through the template preview interface, the user may understand the content of the target template more clearly, which helps the user determine whether to continue to use the target template for image editing. The template preview interface also has a use control, a favorites control, a comment control, etc. By triggering the use control of the template preview interface, the user may enter a subsequent original image uploading operation. In response to the user triggering the favorites control, the target template may be added to their favorites for easy access later. After triggering the comment control, the user may view comments from other users regarding the target template and also leave their own comments, thereby enhancing their understanding of the template and facilitating communication among users. It should be noted that Fig. 3 is for illustrative purposes only and should not be construed as a limitation.

In some implementations, after the user decides to use the target template, an image uploading interface may be provided for the user. As shown in Fig. 4, the user may import a plurality of original images to be edited, and the plurality of original images imported into the template may come from the user's portfolio or photo album. In addition, each image sub-template in the target template may support the editing of one or more original images. It should be noted that although each image sub-template may support the editing of one or more original images, each image sub-template only generates one target image correspondingly. As shown in Fig. 4, the sub-template 1 has two image slots (Image A and Image B), that is, it supports the editing of two original images, and the edited two original images may be merged and stitched together to form one target image in the sub-template 1.

In a case where the user uploads original images for the target template, given that the target template includes a plurality of image sub-templates, the embodiment of the present disclosure provides two methods to determine the original images corresponding to the image sub-templates.

The first method may be implemented according to the following steps A to B.

In step A, according to an arrangement order of the image sub-templates in the target template and the number of images that each image sub-template is able to edit, assigning the original images to the image sub-templates in a preset order.

It can be understood that the number of images that can be edited by the image sub-template is one or more, the preset order may be the sequence of images selected by the user from the portfolio or photo album, or the order in which the images are uploaded, and the original images may be assigned to the image sub-templates one by one according to the preset order. To facilitate understanding, the following example is provided for explanation. Assuming that the target template includes sub-template 1, sub-template 2 and sub-template 3, the number of images that can be edited by sub-template 1 is two, the number of images that can be edited by sub-template 2 is one, the number of images that can be edited by sub-template 3 is three, and the user uploads six original images (image 1 to image 6), then image 1 and image 2 are assigned to sub-template 1, sub-template 1 includes two image slots, so image 1 and image 2 may be assigned to the two image slots in a certain order (such as from top to bottom or from left to right); and image 3 is assigned to sub-template 2, and images 4 to 6 are assigned to sub-template 3.

In step B, determining the original images corresponding to the image sub-templates based on an assignment result.

In practice, the embodiment of the present disclosure can reduce the requirements for the number of images that the user needs to upload. It does not require that the number of original images uploaded by the user be equal to the number of images that the image sub-templates can edit. Instead, it provides a solution for situations where the number of original images uploaded by the user is less than the number of images that the image sub-templates can edit. To facilitate understanding, the following three scenarios B1 to B3 are provided.

B1. For an image sub-template with an assigned number of original images equal to the number of images it is able to edit, taking the assigned original images as the original images corresponding to the image sub-template. For example, image 1 and image 2 assigned to sub-template 1 are the original images corresponding to the sub-template.

B2. For an image sub-template with an assigned number of original images less than the number of images it is able to edit, acquiring supplementary images of the image sub-template, and taking the assigned original images and the supplementary images as the original images corresponding to the image sub-template. Here, the supplementary images are obtained by copying one or more of the original images in a predefined manner.

For example, assuming that the target template includes sub-template 1, sub-template 2 and sub-template 3, the number of images that sub-template 1 can edit is 2, the number of images that sub-template 2 can edit is 1, the number of images that sub-template 3 can edit is 3, and the user only uploads 5 original images (images 1 to 5), according to the above method, only 2 original images are assigned to sub-template 3, so supplementary images of sub-template 3 may be acquired. The supplementary image may be obtained by copying one of the two original images assigned to sub-template 3 or one of the original images 1 to 5. In practice, the original images may be randomly selected for copying, or the original images may be selected according to a preset strategy (such as material similarity and style similarity) for copying, or the image to be copied may be specified by the user, which is not limited here. In this way, all image slots of the sub-template 3 may be filled.

B3. For an image sub-template that does not have any assigned original image, determining that the image sub-template does not have a corresponding original image, and discarding the image sub-template.

For example, assuming that the target template includes sub-template 1, sub-template 2, sub-template 3 and sub-template 4, the number of images that sub-template 1 can edit is 2, the number of images that sub-template 2 can edit is 1, the number of images that sub-template 3 can edit is 3, the number of images that sub-template 4 can edit is 2, and the user only uploads 5 original images, according to the above method, required original images are fully assigned to sub-templates 1 to 2, and after the last two original images are assigned to sub-template 3, an additional original image is copied, resulting in the corresponding original images for sub-template 3; however, no original image is assigned to sub-template 4, so sub-template 4 may be discarded directly.

In this way, the restrictions on the number of images users need to upload can be reduced. Image sub-templates that are partially assigned with images can be supplemented by copying images, while those not assigned with any images can be discarded directly. This approach not only meets the user's needs for image editing but also allows for more flexible use of the templates, effectively enhancing the user's experience with the templates.

The second method may be implemented according to the following steps a to b.

In step a, acquiring template information of the image sub-templates and image information of the original images.

In some specific implementation examples, the template information of the image sub-templates includes material information of each image sub-template (such as material category and material content), the number of images that each image sub-template can edit, and the total number of the image sub-templates, and the image information of the original images includes content information of the original images and the total number of the original images.

In step b, determining the original images corresponding to each image sub-template according to the template information and the image information, the original images corresponding to different image sub-templates being the same or different.

In concrete implementation, the matching degree between each image sub-template and the original images may be determined according to the template information and image information, so that the original images corresponding to each image sub-template can be determined based on the matching degree. For example, if a text material of an image sub-template is "little cutie" and the content information of an original image contains children, then the image sub-template matches the original image. In addition, in response to the number of the original images being less than the number of images that can be edited by the target template, the original images may be supplemented by copying.

In this way, the original images may be adaptively assigned to the image sub-templates based on the matching degree between them, achieving intelligent matching effects that better meet users' needs for image editing. Additionally, users do not need to perform the matching themselves, which saves time and effort in image editing, effectively enhancing users' experience with the templates.

After determining the original images corresponding to the image sub-templates and obtaining the plurality of target images based on the image sub-templates and the original images corresponding to the image sub-templates, while previewing the target images, the preview effects of the plurality of target images corresponding to the target template may be displayed on the image preview interface. In some implementations, the plurality of target images may be displayed on the image preview interface based on an arrangement order of the plurality of image sub-templates in the target template. It can be understood that each image sub-template generates one target image correspondingly, and based on the arrangement order of the plurality of image sub-templates in the target template, the generated multiple target images are displayed on the image preview interface in the same order, which aligns better with users' psychological expectations when viewing the preview effects of the plurality of target images, as they are already aware of the order of the image sub-templates in the target template.

In some specific implementations, the step of displaying the plurality of target images on the image preview interface includes: displaying each target image as a main view image on the image preview interface in turn; and displaying thumbnail images of the plurality of target images on the image preview interface.

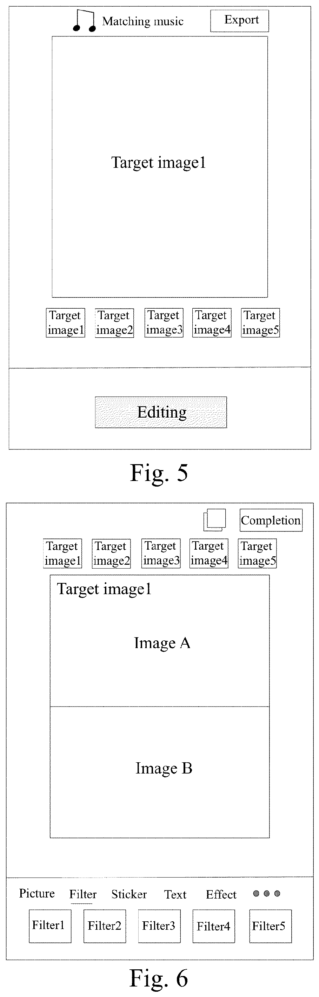

Here, the size of the thumbnail image is smaller than that of the main view image, and the order in which the target images are displayed as the main view image and the arrangement order of the thumbnail images of the target images are both consistent with the arrangement order of the corresponding image sub-templates in the target template. To facilitate understanding, please refer to a schematic diagram of an interface shown in Fig. 5. In this way, users can not only closely examine the details of the target image via the main view image but also get an overall view of the presentation effect of the plurality of target images through the thumbnail images. This helps users intuitively understand the preview effects of the plurality of target images from both detailed and holistic perspectives.

To further enhance the user's image editing experience and make the image editing results more in line with the user's needs, the user may also be provided with image editing controls in the image preview interface, as shown in Fig. 5, which is intended as a simple illustration of an editing control and should not be viewed as a restriction. For example, the image editing controls include one or more of an image content editing control, an order adjustment control, and an image deletion control, which will be described below separately.

In some specific implementations, the image editing controls include an image content editing control, and the multimedia processing method of the present disclosure further includes the following steps (1) to (2).

In step (1), in response to the image content editing control being triggered, switching from the image preview interface to an image editing interface, and displaying an image to be edited in the plurality of target images on the image editing interface, the image editing interface including a plurality of child controls for editing the content of the image to be edited. Different child controls have different functions, such as image replacement control, filter control, text control and effect control, which is not limited here. To facilitate understanding, please refer to Fig. 6, which shows that an image editing interface contains an image to be edited and a variety of functional controls for editing the image. In response to the user triggering the filter control, a variety of filters that can be applied to the target image may be further displayed. It should be noted that Fig. 6 is only an example and should not be considered as a limitation.

In step (2), in response to a target child control among the plurality of child controls being triggered, editing the image to be edited based on the trigger operation on the target child control. Users may further customize the target image using the child controls according to their needs, making the image more aligned with their preferences, which greatly enhances the flexibility and convenience of image editing.

In some implementations, the image editing interface also includes a thumbnail image display control. For example, in Fig. 6, next to a completion control which signifies the completion of editing, is the thumbnail image display control, and the user may change the corresponding state by triggering the thumbnail image display control. In the embodiment of the present disclosure, two cases are provided based on the state of the thumbnail image display control.

Case 1: In response to the thumbnail image display control being in a first state, displaying the thumbnail images of the plurality of target images on the image editing interface. In this way, while editing the current target image, users may also clearly view the effects of other target images through the thumbnail images. This helps users integrate information of all the target images when editing the current image, ensuring that the resulting edited image better meets their needs.

In some specific implementations, arrangement and display positions of the thumbnail images of the plurality of target images on the image editing interface may be determined according to a content editing operation of the user on the image to be edited; then, based on the arrangement and display positions, the thumbnail images of the plurality of target images are displayed on the image editing interface. For example, in response to detecting that a user edits image A in target image 1 shown in Fig. 6, thumbnail images of a plurality of target images may be displayed above image A, and in response to detecting that a user edits image B in target image 1 shown in Fig. 6, thumbnail images of a plurality of target images may be displayed above image B. This approach helps users conveniently and quickly view the preview effects of all the target images while editing, further enhancing the efficiency of image editing.

In other specific implementations, the arrangement and display positions of the thumbnail images of the plurality of target images on the image editing interface may also be fixed, such as above or below the image to be edited, which is not limited here.

Case 2: In response to the thumbnail image display control being in a second state, hiding the thumbnail images of the plurality of target images on the image editing interface. If the user does not need to view the thumbnail images of the plurality of target images, they may be hidden directly, meaning that the thumbnail images in Fig. 6 will not be displayed.

In the embodiments of the present disclosure, the user can determine whether the image editing interface displays the thumbnail images of the plurality of target images as needed, thus, the user's image editing experience can be effectively improved.

To sum up, the user may enter the image editing interface by triggering the image editing controls in the image preview page, and personalize the target image to be edited through the image editing interface, allowing for more flexible adjustments to the target image based on their needs.

In some implementation examples, the image editing controls include an order adjustment control, and the multimedia processing method further includes: in response to the order adjustment control being triggered, adjusting a display order of the plurality of target images based on the trigger operation on the order adjustment control.

The order adjustment control may be a control displayed in the image preview interface, allowing the user to directly trigger the control to adjust the order of the target image. The order adjustment control may also be a hidden control, for example, it may be associated with the thumbnail images of the plurality of target images in the image preview interface, and in response to detecting that the user drags the thumbnail images, it is considered that the user triggers the order adjustment control, and the display order of the plurality of target images is adjusted according to the dragging action of the user.

In this way, the user may flexibly adjust the display order of the plurality of target images without being restricted to the arrangement of the sub-templates in the target template, allowing the final presentation of the plurality of target images to better align with user needs.

In some implementation examples, the image editing controls include an image deletion control, and the multimedia processing method further includes: in response to the image deletion control being triggered, deleting a target image corresponding to the trigger operation on the image deletion control.

The image deletion control may be a control displayed in the image preview interface, allowing the user to directly trigger the control to delete unnecessary target images. The image deletion control may also be a hidden control, for example, it may be associated with the thumbnail images of the plurality of target images in the image preview interface, and in response to detecting that the user operates the thumbnail images in a certain way (such as long press and double click), it is considered that the user triggers the image deletion control and the target image corresponding to the trigger operation on the image deletion control is deleted.

In this way, the user may flexibly adjust the display order of the plurality of target images without being restricted to the arrangement of the sub-templates in the target template, allowing the final presentation of the plurality of target images to better align with user needs.

In some implementation examples, the image preview interface also displays the information of the matching music of the target template, and the image preview interface also includes a music replacement control. The multimedia processing method also includes: in response to the music replacement control being triggered, displaying a music list; and in response to a music selection operation based on the music list, replacing the matching music of the target template with target music corresponding to the music selection operation.

In the embodiments of the present disclosure, in order to enhance the appeal of multimedia, the target template is also associated with matching music. The theme of the matching music is similar to the theme of the target template, for example, both have cute themes, or both have nostalgic themes. The image preview interface may display information about the matching music, including the music title and artist. Additionally, the user may replace the matching music through the music replacement control, ultimately presenting the desired music to the user. Afterwards, during the process of displaying multiple target images alternately in order, the user's selected target music can be played, presenting multimedia information that combines the images and music required by the user as a whole.

In the image preview interface, the plurality of target images may be displayed as the main view image in a carousel form, and at the same time, the target music is played. The user may change the currently displayed main view image by switching the main view image or clicking on the thumbnail images, without impacting the playback of the target music.

In some implementations, the plurality of target images have corresponding multimedia associated resources, and the multimedia associated resources are multimedia resources that are simultaneously played during the carousel presentation of the plurality of target images. The multimedia associated resources may be music, narration or animation, etc., which is not limited here.

The plurality of target images generated based on the target template and the multimedia associated resources may be packaged to form a multimedia resource package, which can be uploaded to a designated platform for display or sharing.

To sum up, according to the embodiments of the present disclosure, the plurality of target images can be obtained directly by means of the target template including the plurality of image sub-templates and the original images uploaded by the user, and the user may also adjust the target images by using the image editing controls in the image preview process, which is convenient and fast, effectively shortening the time required for editing multiple images and enhancing editing efficiency, thereby allowing users to quickly and easily obtain multimedia resources that meet their requirements.

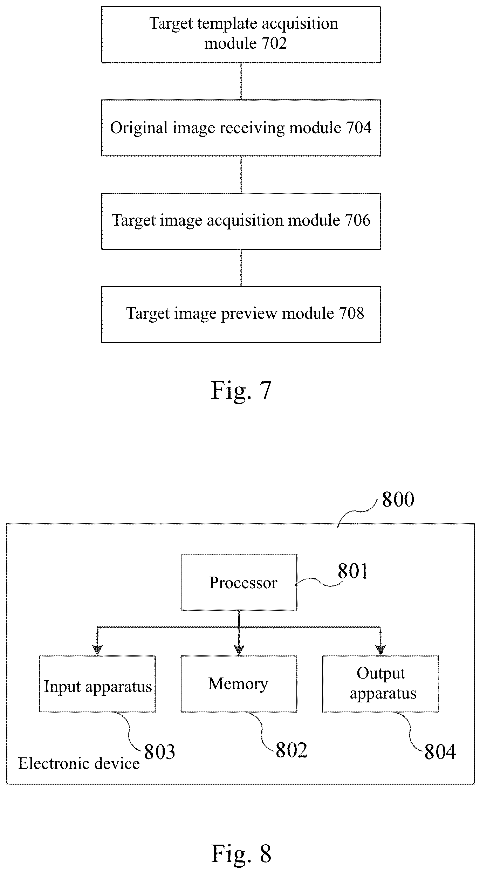

Corresponding to the aforementioned multimedia processing method, Fig. 7 is a schematic diagram of a multimedia processing apparatus according to an embodiment of the present disclosure. The apparatus may be realized by software and/or hardware and is generally integrated in an electronic device. As shown in Fig. 7, the apparatus includes:
a target template acquisition module 702 configured to, in response to receiving a template selection instruction from a user, acquire a target template corresponding to the template selection instruction, the target template including a plurality of image editing sub-templates;
an original image receiving module 704 configured to receive at least one original image uploaded by the user for the target template;
a target image acquisition module 706 configured to determine original images corresponding to the image sub-templates, and obtain a plurality of target images based on the image sub-templates and the original images corresponding to the image sub-templates; and
a target image preview module 708 configured to display preview effects of the plurality of target images corresponding to the target template on an image preview interface while previewing the plurality of target images, the image preview interface including image editing controls for adjusting the plurality of target images.

In this way, the plurality of target images can be obtained directly by means of the target template including the plurality of image sub-templates and the original images uploaded by the user, and the user may also adjust the target images by using the image editing control in the image preview process, which is convenient and fast, effectively shortening the time required for editing multiple images and enhancing editing efficiency.

In some implementations, the target image acquisition module 706 is specifically configured to, according to an arrangement order of the image sub-templates in the target template and the number of images that each image sub-template is able to edit, assign the original images to the image sub-templates in a preset order; and determine the original images corresponding to the image sub-templates based on an assignment result.

In some implementations, the target image acquisition module 706 is specifically configured to, for an image sub-template with an assigned number of original images equal to the number of images it is able to edit, take the assigned original images as the original images corresponding to the image sub-template; for an image sub-template with an assigned number of original images less than the number of images it is able to edit, acquire supplementary images of the image sub-template, and take the assigned original images and the supplementary images as the original images corresponding to the image sub-template, the supplementary images being obtained by copying one or more of the original images in a predefined manner; and for an image sub-template that does not have any assigned original image, determine that the image sub-template does not have a corresponding original image, and discard the image sub-template.

In some implementations, the target image acquisition module 706 is specifically configured to, acquire template information of the image sub-templates and image information of the original images; and determine the original images corresponding to each image sub-template according to the template information and the image information, the original images corresponding to different image sub-templates being the same or different.

In some implementations, the target image acquisition module 706 is specifically configured to, the template information of the image sub-templates includes material information of each image sub-template, the number of images that each image sub-template can edit, and the total number of the image sub-templates, and the image information of the original images includes content information of the original images and the total number of the original images.

In some implementations, the target image preview module 708 is specifically configured to display the plurality of target images on the image preview interface based on an arrangement order of the plurality of image sub-templates in the target template.

In some implementations, the target image preview module 708 is specifically configured to, display each target image as a main view image on the image preview interface in turn; and display thumbnail images of the plurality of target images on the image preview interface. Here, the size of the thumbnail image is smaller than that of the main view image, and the order in which the target images are displayed as the main view image and the arrangement order of the thumbnail images of the target images are both consistent with the arrangement order of the corresponding image sub-templates in the target template.

In some implementations, the image editing controls include an image content editing control, and the apparatus further includes a content editing module, which is configured to, in response to the image content editing control being triggered, switch from the image preview interface to an image editing interface, and display an image to be edited in the plurality of target images on the image editing interface, the image editing interface including a plurality of child controls for editing the content of the image to be edited; and in response to a target child control among the plurality of child controls being triggered, edit the image to be edited based on the trigger operation on the target child control.

In some implementations, the image editing interface further includes a thumbnail image display control, and the apparatus also includes a thumbnail image display module, which is configured to, in response to the thumbnail image display control being in a first state, display the thumbnail images of the plurality of target images on the image editing interface; and in response to the thumbnail image display control being in a second state, hide the thumbnail images of the plurality of target images on the image editing interface.

In some implementations, the thumbnail image display module is specifically configured to, determine arrangement and display positions of the thumbnail images of the plurality of target images on the image editing interface according to a content editing operation of the user on the image to be edited; and based on the arrangement and display positions, display the thumbnail images of the plurality of target images on the image editing interface.

In some implementations, the image editing controls include an order adjustment control and/or an image deletion control, and the apparatus further includes:
an order adjustment module configured to, in response to the order adjustment control being triggered, adjust a display order of the plurality of target images based on the trigger operation on the order adjustment control; and
a deletion module configured to, in response to the image deletion control being triggered, delete a target image corresponding to the trigger operation on the image deletion control.

In some implementations, the plurality of target images have corresponding multimedia associated resources, and the multimedia associated resources are multimedia resources that are simultaneously played during the carousel presentation of the plurality of target images.

The multimedia processing apparatus provided by the embodiments can perform the multimedia processing method provided by any embodiment of the present disclosure, and has corresponding functional modules for executing the method, and thus, can achieve similar technical effects.

It can be clearly understood by those skilled in the art that for the convenience and conciseness of description, the specific working process of the apparatus embodiments described above can be found in the corresponding process in the method embodiments, which will not be repeated here.

An embodiment of the present disclosure provides an electronic device, which includes a processor and a memory for storing processor-executable instructions, and the processor is used for reading the executable instructions from the memory and executing the instructions to implement the multimedia processing method.

Fig. 8 is a schematic diagram of an electronic device according to an embodiment of the present disclosure. As shown in Fig. 8, the electronic device 800 includes one or more processors 801 and a memory 802.

The processor 801 may be a central processing unit (CPU) or other forms of processing unit with data processing capability and/or instruction execution capability, and may control other components in the electronic device 800 to perform desired functions.

The memory 802 may include one or more computer program products, and the computer program product may be various forms of computer-readable storage media, such as volatile memory and/or nonvolatile memory. The volatile memory may be, for example, a random access memory (RAM) and/or a cache, etc. The nonvolatile memory may be, for example, a read-only memory (ROM), a hard disk, a flash memory, etc. One or more computer program instructions may be stored on the computer-readable storage medium, and the processor 801 may execute the program instructions to implement the multimedia processing method and/or other desired functions according to the embodiments of the present disclosure described above. Input signals, signal components, noise components and the like may also be stored in the computer-readable storage medium.

In one example, the electronic device 800 may further include an input apparatus 803 and an output apparatus 804, which are interconnected by a bus system and/or other forms of connection mechanisms (not shown).

In addition, the input apparatus 803 may also include, for example, a keyboard and a mouse.

The output apparatus 804 may output information to the outside, including determined distance information, direction information, etc. The output apparatus 804 may include, for example, a display, a speaker, a printer, a communication network and a remote output device connected thereto.

Of course, for simplicity, only some components related to the present disclosure in the electronic device 800 are shown in Fig. 8, and components such as a bus and an input/output interface are omitted. Besides, according to the specific application, the electronic device 800 may also include any other suitable components.

In addition to the above method and device, an embodiment of the present disclosure may also provide a computer program product, which includes computer program instructions that, when executed by a processor, cause the processor to execute the multimedia processing methods provided by the embodiments of the present disclosure.

According to the computer program product, program codes for performing the operations of the embodiments of the present disclosure may be written by any combination of one or more programming languages, including object-oriented programming languages such as Java, C++, and conventional procedural programming languages such as "C" language or similar programming languages. The program code may be completely executed on user computing equipment, partially executed on user equipment, executed as an independent software package, partially executed on user computing equipment and partially executed on remote computing equipment, or completely executed on remote computing equipment or a server.

In addition, an embodiment of the present disclosure may also provide a computer-readable storage medium, on which computer program instructions are stored, which, when executed by a processor, cause the processor to execute the multimedia processing method provided by the embodiments of the present disclosure.

The computer-readable storage medium may adopt any combination of one or more readable media. The readable medium may be a readable signal medium or a readable storage medium. The readable storage medium may be, for example, but not limited to, an electrical, magnetic, optical, electromagnetic, infrared, or semiconductor system, apparatus or device, or a combination of any of the above. More specific examples (a non-exhaustive list) of readable storage media include: electrical connection with one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

An embodiment of the present disclosure also provides a computer program product, including computer programs/instructions, which, when executed by a processor, implement the multimedia processing method in the embodiments of the present disclosure.

It should be noted that, relationship terms used herein such as "first" and "second" are only used to distinguish one entity or operation from another, and do not necessarily require or imply any actual relationship or order between these entities or operations. Moreover, the terms "including", "containing", or any other variation thereof are intended to encompass non-exclusive inclusion, such that a process, method, item, or device that includes a series of elements includes not only those elements, but also other elements not explicitly listed, or elements inherent to such process, method, item, or device. Without further limitations, the element defined by the statement "including one..." does not exclude the existence of other identical elements in the process, method, item, or device that includes the element in question.

The above description is only a specific implementation of the present disclosure, which enables those skilled in the art to understand or implement the present disclosure. Various modifications to these embodiments will be apparent to those skilled in the art, and the general principles defined herein can be implemented in other embodiments without departing from the spirit or scope of the present disclosure. Therefore, the present disclosure will not be limited to the embodiments described herein, but will be within the widest scope consistent with the principles and novel features disclosed herein.

## Claims

1. A multimedia processing method, comprising:
in response to receiving a template selection instruction from a user, acquiring a target template corresponding to the template selection instruction, wherein the target template comprises a plurality of image sub-templates;
receiving at least one original image uploaded by the user for the target template;
determining original images corresponding to image sub-templates, and obtaining a plurality of target images based on the image sub-templates and the original images corresponding to the image sub-templates; and
displaying preview effects of the plurality of target images corresponding to the target template on an image preview interface while previewing the plurality of target images, wherein the image preview interface comprises image editing controls for adjusting the plurality of target images.

2. The method according to claim 1, wherein the determining original images corresponding to image sub-templates comprises:
according to an arrangement order of the image sub-templates in the target template and a number of images that each image sub-template being able to edit, assigning the original images to the image sub-templates in a preset order; and
determining the original images corresponding to the image sub-templates based on an assignment result.

3. The method according to claim 2, wherein the determining the original images corresponding to the image sub-templates based on an assignment result comprises:
for an image sub-template with an assigned number of original images equal to the number of images it is able to edit, taking the assigned original images as the original images corresponding to the image sub-template;
for an image sub-template with an assigned number of original images less than the number of images it is able to edit, acquiring supplementary images of the image sub-template, and taking the assigned original images and the supplementary images as the original images corresponding to the image sub-template, wherein the supplementary images are obtained by copying one or more of the original images in a predefined manner; and
for an image sub-template that does not have any assigned original image, determining that the image sub-template does not have a corresponding original image, and discarding the image sub-template.

4. The method according to claim 1, wherein the determining original images corresponding to image sub-templates comprises:
acquiring template information of the image sub-templates and image information of the original images; and
determining the original images corresponding to each image sub-template according to the template information and the image information, wherein the original images corresponding to different image sub-templates are the same or different.

5. The method according to claim 4, wherein the template information of the image sub-templates comprises material information of each image sub-template, a number of images that each image sub-template is able to edit, and a total number of the image sub-templates, and the image information of the original images comprises content information of the original images and a total number of the original images.

6. The method according to claim 1, wherein displaying preview effects of the plurality of target images corresponding to the target template on an image preview interface comprises:
displaying the plurality of target images on the image preview interface based on an arrangement order of the plurality of image sub-templates in the target template.

7. The method according to claim 6, wherein the displaying the plurality of target images on the image preview interface comprises:
displaying each target image of the plurality of target images as a main view image on the image preview interface in turn; and
displaying thumbnail images of the plurality of target images on the image preview interface,
wherein a size of the thumbnail images is smaller than that of the main view image, and the order in which the target images are displayed as the main view image and the arrangement order of the thumbnail images of the target images are both consistent with the arrangement order of the corresponding image sub-templates in the target template.

8. The method according to any one of claims 1-7, wherein the image editing controls comprise an image content editing control, and the method further comprises:
in response to the image content editing control being triggered, switching from the image preview interface to an image editing interface, and displaying an image to be edited among the plurality of target images on the image editing interface, wherein the image editing interface comprises a plurality of child controls for editing content of the image to be edited; and
in response to a target child control among the plurality of child controls being triggered, editing the image to be edited based on a trigger operation on the target child control.

9. The method according to claim 8, wherein the image editing interface further comprises a thumbnail image display control, and
wherein the method further comprises:
in response to the thumbnail image display control being in a first state, displaying the thumbnail images of the plurality of target images on the image editing interface; and
in response to the thumbnail image display control being in a second state, hiding the thumbnail images of the plurality of target images on the image editing interface.

10. The method according to claim 9, wherein displaying the thumbnail images of the plurality of target images on the image editing interface comprises:
determining arrangement and display positions of the thumbnail images of the plurality of target images on the image editing interface according to a content editing operation of the user on the image to be edited; and
based on the arrangement and display positions, displaying the thumbnail images of the plurality of target images on the image editing interface.

11. The method according to any one of claims 1-10, wherein the image editing controls comprise an order adjustment control and/or an image deletion control, and the method further comprises:
in response to the order adjustment control being triggered, adjusting a display order of the plurality of target images based on a trigger operation on the order adjustment control; and
in response to the image deletion control being triggered, deleting a target image corresponding to a trigger operation on the image deletion control.

12. The method according to any one of claims 1-11, wherein the plurality of target images have corresponding multimedia associated resources, and the multimedia associated resources are multimedia resources that are simultaneously played during the carousel presentation of the plurality of target images.

13. A multimedia processing apparatus, comprising:
a target template acquisition module, configured to in response to receiving a template selection instruction from a user, acquire a target template corresponding to the template selection instruction, wherein the target template comprises a plurality of image sub-templates;
an original image receiving module, configured to receive at least one original image uploaded by the user for the target template;
a target image acquisition module, configured to determine original images corresponding to image sub-templates, and obtain a plurality of target images based on the image sub-templates and the original images corresponding to the image sub-templates; and
a target image preview module, configured to display preview effects of the plurality of target images corresponding to the target template on an image preview interface while previewing the plurality of target images, wherein the image preview interface comprises image editing controls for adjusting the plurality of target images.

14. An electronic device, comprising:
a processor; and
a memory for storing executable instructions;
wherein the processor is configured to read the executable instructions from the memory and execute the executable instructions to implement the multimedia processing method according to any one of the claims 1-12.

15. A computer-readable storage medium on which a computer program is stored, wherein the computer program is used to implement the multimedia processing method according to any one of claims 1-12.
